(19) Europäisches Patentamt
European Patent Office
Office européen des brevets

(11) **EP 4 204 359 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **21769951.1**

(22) Anmeldetag: **26.08.2021**

(51) Internationale Patentklassifikation (IPC):
**C01B 32/00** *(2017.01)* **C01B 32/05** *(2017.01)*
**C09C 1/48** *(2006.01)* **C09C 1/56** *(2006.01)*

(52) Gemeinsame Patentklassifikation (CPC):
**C01B 32/00; C01B 32/05; C09C 1/48; C09C 1/56;**
C01P 2004/51; C01P 2004/61; C01P 2006/12;
Y02E 60/10

(86) Internationale Anmeldenummer:
**PCT/EP2021/073685**

(87) Internationale Veröffentlichungsnummer:
**WO 2022/043470 (03.03.2022 Gazette 2022/09)**

(54) **FEINTEILIGE MODIFIZIERTE PARTIKELFÖRMIGE KOHLENSTOFFMATERIALIEN UND VERFAHREN ZU IHRER HERSTELLUNG**

MODIFIED FINE PARTICULATE CARBON MATERIALS AND METHOD FOR PRODUCING SAME

MATIÈRES CARBONÉES PARTICULAIRES FINES MODIFIÉES ET LEUR PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Validierungsstaaten:
**MA**

(30) Priorität: **26.08.2020 DE 102020210801**

(43) Veröffentlichungstag der Anmeldung:
**05.07.2023 Patentblatt 2023/27**

(73) Patentinhaber: SunCoal Industries GmbH
**14974 Ludwigsfelde (DE)**

(72) Erfinder:
• **WITTMANN, Tobias**
**10965 Berlin (DE)**
• **PODSCHUN, Jacob**
**12555 Berlin (DE)**
• **LÜDER, Ulf**
**14513 Teltow (DE)**
• **SCHMAUCKS, Gerd**
**27383 Scheeßl (DE)**

(74) Vertreter: **Steffan & Kiehne Patentanwälte PartG mbB**
**Burgplatz 21-22**
**40213 Düsseldorf (DE)**

(56) Entgegenhaltungen:
WO-A1-2010/043562    DE-A1- 102016 201 801
DE-A1- 102018 220 946

**Beschreibung**

Die vorliegende Erfindung betrifft feinteilige modifizierte partikelförmige Kohlenstoffmaterialien sowie deren Verwendung.

**Stand der Technik**

Feinteilige partikelförmige Kohlenstoffmaterialien werden in vielen Anwendungsbereichen eingesetzt. Diese reichen vom Einsatz als schwarzer Farbstoff bis zum Einsatz als Füllstoff in Polymeren, zum Beispiel Elastomeren, Thermoplasten oder thermoplastischen Elastomeren. Derartige, auf Kohlenstoff basierte Materialien, können beispielsweise Ruß sein, Materialien mit einem relativ hohen Anteil an Kohlenstoff. WO 2010/043562 A1 betrifft Ruß mit einem 14C Gehalt größer 0,05 Bq/g und einem Verhältnis $\Delta$D50/Dmode der Aggregatgrößenverteilung von kleiner 0,7, welcher hergestellt wird durch thermisch-oxidative Pyrolyse oder thermische Spaltung eines Rußrohstoffes enthaltend nachwachsende Rußrohstoffe. Andere partikelförmige Kohlenstoffmaterialien werden aus nachwachsenden Rohstoffen gewonnen. Derartige partikelförmige Kohlenstoffmaterialien weisen im Vergleich mit Ruß einen etwas geringeren Anteil an Kohlenstoff auf, zeigen aber aufgrund eines hohen Grads an Funktionalisierung interessante Eigenschaften. Besonders interessante Ausgangsstoffe für die Herstellung von auf nachwachsenden Rohstoffen basierenden partikelförmigen Kohlenstoffmaterialien sind Ausgangsstoffe, die sich ganz oder teilweise in Lösung bringen lassen, beispielsweise Zucker, Stärke oder Lignin. Solche ganz oder teilweise in Lösung befindlichen, auf nachwachsenden Rohstoffen basierenden Ausgangsstoffe lassen sich durch Fällprozesse in partikelförmige Kohlenstoffmaterialien überführen. Fällprozesse zur Herstellung von sich in Lösung befindlichen partikelförmigen Kohlenstoffmaterialien sind dem Fachmann hinreichend bekannt.

Beispielsweise lässt sich aus Lignin, welches in einer Base beispielsweise Natronlauge gelöst ist, durch eine Fällung durch Einleitung eines sauren Gases wie $CO_2$ oder $H2S$ oder durch Zugabe einer Säure wie $H_2SO_4$ ein lignin-basiertes partikelförmiges Kohlenstoffmaterial gewinnen. Beispiele für diesen Stand der Technik sind in WO2006031175, WO2006038863 oder WO2009104995 angegeben.

Weiterhin lässt sich aus Lignin, welches in einer Base beispielsweise Natronlauge gelöst ist durch Erhöhung der Temperatur auf zum Beispiel Bedingungen einer hydrothermalen Karbonisierung durch eine Fällung mit gleichzeitiger Stabilisierung ein lignin-basiertes partikelförmiges Kohlenstoffmaterial gewinnen. Beispiele für diesen Stand der Technik sind in WO 2016/020383 oder WO 2017/085278 beschrieben.

DE 10 2018 220946 A1 offenbart ein Verfahren zur Auftrennung partikelförmiger Kohlenstoffmaterialien mittels Schwerkrafttrennung sowie nach diesem Verfahren herstellbare partikelförmige Kohlenstoffmaterialien.

Verfahren zur Fällung durch Einleitung eines sauren Gases, durch Zugabe einer Säure oder durch Temperaturerhöhung lassen sich auch miteinander kombinieren.

Bei der Herstellung partikelförmiger Kohlenstoffmaterialien eröffnet die Anpassung bestimmter Verfahrensparameter die Beeinflussung insbesondere der zu erhaltenden Korngrößen (also die Größe der zu erhaltenden Agglomerate, die ggf. aus Primärteilchen aufgebaut sind) bzw. der Korngrößenverteilung, als auch die Einstellung von Oberflächenparametern, insbesondere der spezifischen Oberfläche, die auch als Maß für die Primärteilchengröße verwendet wird.

Die Korngröße bzw. die Korngrößenverteilung kann zum Beispiel durch Siebanalyse oder durch Laserbeugung quantifiziert werden. Eine Siebanalyse kann zum Beispiel für das trockene partikelförmige Kohlenstoffmaterial entsprechend der DIN 66165 erfolgen. Eine Laserbeugung kann zum Beispiel für die in Wasser dispergierten partikelförmige Kohlenstoffmaterial entsprechend der ISO13320 erfolgen.

Die Primärteilchengröße kann beispielsweise über Verfahren zur Bestimmung der spezifischen Oberfläche, wie BET-Bestimmungen oder STSA-Bestimmungen quantifiziert werden. Dabei wird durch eine BET-Messung die Summe der äußeren und inneren Oberfläche bestimmt, während bei einer STSA-Bestimmung lediglich die äußere Oberfläche bestimmt wird. Geeignete Bestimmungsmethoden sind beispielsweise in der ASTM D 6556-14 angegeben. Bei der Wahl der Temperatur der Ausgasung ist zu beachten, dass diese zur Untersuchung der partikelförmigen Kohlenstoffmaterialien auf einen Wert von etwa 150°C einzustellen ist.

Es ist bekannt, dass die durchschnittliche Größe der Primärpartikel bzw. die Höhe der spezifischen Oberfläche einen Einfluss auf die Eigenschaften der unter Nutzung der partikelförmigen Kohlenstoffmaterialien hergestellten Materialien hat, beispielsweise von Gummiartikeln, hergestellt durch Compoundierung des partikelförmigen Kohlenstoffmaterials mit Elastomeren mit nachfolgender Vernetzung. So ist beispielsweise das Abriebverhalten eines Gummiartikels anders, je nachdem ob partikelförmige Kohlenstoffmaterialien mit höherer oder niedrigerer BET-Oberfläche eingesetzt werden. Ähnlich verhält es sich bei mechanischen Eigenschaften, wie der Zugfestigkeit. Höhere Werte für die BET-Oberfläche korrelieren dabei mit höheren Zugfestigkeitswerten und geringerem Abrieb. Hier sind bei der Nutzung partikelförmiger Kohlenstoffmaterialien häufig Werte für die spezifische Oberfläche von mindestens 5 $m^2$/g, bevorzugt mindestens 8 $m^2$/g, weiter bevorzugt mindestens 10 $m^2$/g darüber hinaus bevorzugt mindestens 15 $m^2$/g oder mehr

erforderlich, um hochwertige Gummiartikel zu erhalten.

Ein Nachteil der bekannten beispielsweise durch Fällung von ganz oder teilweise gelösten auf nachwachsenden Rohstoffen basierenden Ausgangsstoffen gewonnenen partikelförmigen Kohlenstoffmaterialien, insbesondere von Lignin-basierten partikelförmigen Kohlenstoffmaterialien ist allerdings der unangenehme Geruch, welcher vom partikelförmigen Kohlenstoffmaterial an sich ausgeht, bei der Verarbeitung des partikelförmigen Kohlenstoffmaterials freigesetzt wird und/oder von den das partikelförmige Kohlenstoffmaterial enthaltenen Materialien ausgeht. Dies schränkt die Einsatzmöglichkeiten der an sich hochinteressanten partikelförmigen Kohlenstoffmaterialien stark ein.

Der unangenehme Geruch von lignocellulosebasierten Materialien wird insbesondere durch thermische oder chemische Abbauprozesse des Lignins, der Hemizellulose und der Zellulose und weiterer Holzinhaltsstoffe (z.B. Harze), die im Verarbeitungsprozess des Holzes entstehen, hervorgerufen.

Zu den Verbindungen, die den unangenehmen Geruch bedingen, zählen schwefelhaltige Substanzen wie Dimethylsulfid, Dimethyldisulfid, Dimethyltrisulfid oder Dimethyltetrasulfid, oder auch phenolische Substanzen wie Phenol, Guajacol, Ethylguajacol u.ä.

Auch wird eine Vielzahl von flüchtigen organischen Verbindungen freigesetzt. Zu den flüchtigen organischen Verbindungen, auch VOCs genannt, gehören flüchtige organische Stoffe, die leicht verdampfen bzw. bereits bei niedrigeren Temperaturen, wie zum Beispiel Raumtemperatur als Gas vorliegen. Die flüchtigen organischen Verbindungen VOC sind entweder bereits im Holzmaterial vorhanden und werden während der Aufarbeitung aus diesem abgegeben oder sie werden nach derzeitigem Erkenntnisstand durch den Abbau von Fettsäuren gebildet, die wiederum Zersetzungsprodukte des Holzes sind. Typische Umwandlungsprodukte, die während der Bearbeitung auftreten, sind zum Beispiel höhere Aldehyde oder auch organische Säuren. Organische Säuren fallen insbesondere als Spaltprodukte der Holzbestandteile Zellulose, Hemizellulosen und Lignin an, wobei bevorzugt Alkansäuren, wie Essigsäure, Propionsäure, Hexansäure oder aromatische Säuren gebildet werden. Aldehyde werden während der hydrolytischen Aufarbeitung aus den Grundbausteinen der Zellulose oder Hemizellulose gebildet. So wird z.B. der Aldehyd Furfural aus Mono-und Disacchariden der Zellulose bzw. Hemizellulose gebildet, während aromatische Aldehyde während des partiell stattfindenden hydrolytischen Aufschlusses von Lignin freigesetzt werden können. Weitere freigesetzte Aldehyde sind u.a. die höheren Aldehyde Hexanal, Pentanal oder Octanal.

Verfahren zur Geruchsreduktion von auf Lignin-basierenden partikelförmigen Kohlenstoffmaterialien sind im Stand der Technik bekannt. Diese setzen zum einen auf die Vorreinigung des Lignins, beispielsweise durch Extraktionsverfahren (WO2013/101397), enzymatisch katalysierte Reaktionen (DE 10 2006 057566), Behandlung mit oxidierenden Komponenten mit anschließender Wäsche (DE 10 1013 001678), zum Anderen auf die Behandlung beispielsweise von Schwarzlauge, durch Verdampfungsprozesse, Behandlung mit Reduktionsmitteln oder Oxidationsmitteln oder auch Chlorierungsreaktionen ebenso wie Hochtemperaturbehandlungen. Allerdings erfordern derartige Verfahren eine Behandlung relativ großer Stoffmengen bzw. erfordern den Einsatz von Chemikalien, was sowohl vom apparativen als auch vom finanziellen Aufwand her nachteilig ist.

Verfahren zur Behandlung von hydrothermal karbonisiertem Lignin bei erhöhter Temperatur sind zum Beispiel aus EP 3053929 bekannt. In EP 3053929 wird ein hydrothermal karbonisiertes Lignin zwecks einer Endbearbeitung zum Beispiel in einer Aktivierung einer Stabilisierung bevorzugt unter einem Inertgas unterzogen. Die hydrothermale Karbonisierung wird bei Temperaturen zwischen 150°C und 300°C bevorzugt bei 150°C - 250°C durchgeführt. Die Stabilisierung wird bei einer geeigneten Temperatur durchgeführt, wobei diese Temperatur mindestens 30°C oberhalb der Temperatur der hydrothermalen Karbonisierung liegt. Die Temperaturen der Stabilisierung liegen zwischen 200 und 700°C, bevorzugt 300 und 600°C, idealerweise 500 - 600°C. Somit ergibt sich bei einer Temperatur der hydrothermalen Karbonisierung von 300°C eine minimale Temperatur der Stabilisierung von 330°C und bei einer Temperatur der hydrothermalen Karbonisierung von 250°C eine Temperatur der Stabilisierung von 280°C. Die Aufheizrate liegt dabei zwischen 0,1 - 20 °C/min. Dabei treten Gase, hauptsächlich Sauerstoff und Wasserstoff, aus dem Material aus, welche bevorzugt während der Behandlung abgeführt werden. Zweck dieser thermischen Behandlung ist es das Ziel, das hydrothermal karbonisierte Lignin so zu stabilisieren, dass für eine Endverarbeitung bevorzugt einer Aktivierung zur Erzeugung von Aktivkohle vorbereitet wird.

Verfahren zur Geruchreduktion von Holz bei erhöhter Temperatur sind zum Beispiel aus EP 3 170 635 B1 bekannt. Hierbei werden lange Holzspäne mit einer Länge zwischen 150 und 200 mm, einer Breite zwischen 15 und 20mm und einer Dicke zwischen 0,5 und 2 mm bei Temperaturen zwischen 150°C und 300°C in einer sauerstoffarmen oder sauerstofffreien Atmosphäre für eine Dauer zwischen 1 und 5 h torrefiziert. Der Masseverlust beträgt dabei zwischen 10 und 30%.

Es wäre also wünschenswert ein Verfahren bereitstellen zu können, dass eine gezielte Reduktion des Geruchs welcher vom partikelförmigen Kohlenstoffmaterial an sich ausgeht, bei der Verarbeitung des partikelförmigen Kohlenstoffmaterials freigesetzt wird und/oder von den das partikelförmige Kohlenstoffmaterial enthaltenen Materialien ausgeht, ohne den Einsatz weiterer Prozesschemikalien ermöglicht, vorzugsweise durch Behandlung des bereits erhaltenen partikelförmigen Kohlenstoffmaterials. So können Kosten und apparativer Aufwand verringert werden, gleichzeitig ist dabei die Menge an zu verarbeitetem Material geringer. Eine weitere Anforderung an ein solches Verfahren ist allerdings, dass bei der Behandlung zur Geruchsreduktion nicht die erwünschten Eigenschaften des partikelförmigen Kohlenstoffmaterials, wie beispielsweise die Korngröße bzw. Korngrößenverteilung oder Primärpartikelgröße bzw. die spezifische Oberfläche, verloren gehen.

Weiterer Nachteil der bekannten beispielsweise durch Fällung von ganz oder teilweise gelösten auf nachwachsenden Rohstoffen basierenden Ausgangsstoffen gewonnenen partikelförmigen Kohlenstoffmaterialien, insbesondere von Lignin-basierten partikelförmigen Kohlenstoffmaterialien ist allerdings deren hohe Polarität. Dies schränkt die Einsatzmöglichkeiten der an sich hochinteressanten partikelförmigen Kohlenstoffmaterialien insbesondere als Additive, Reagenz oder Füllstoff bei Nutzung in Materialien mit deutlich anderer Polarität stark ein.

Es wäre also des Weiteren wünschenswert ein Verfahren bereitstellen zu können, mit welchem gezielt die Polarität vom partikelförmigen Kohlenstoffmaterial eingestellt werden kann, vorzugsweise durch Behandlung des bereits erhaltenen partikelförmigen Kohlenstoffmaterials. So können Kosten und apparativer Aufwand verringert werden, gleichzeitig ist dabei die Menge an zu verarbeitetem Material geringer. Eine weitere Anforderung an ein solches Verfahren ist allerdings, dass bei der Behandlung zur Einstellung der Polarität nicht die erwünschten Eigenschaften des partikelförmigen Kohlenstoffmaterials, wie beispielsweise die Korngröße bzw. Korngrößenverteilung oder Primärpartikelgröße bzw. die spezifische Oberfläche, verloren gehen.

Auch sollte der Materialverlust nicht zu hoch sein, da das partikelförmige Kohlenstoffmaterial bereits ein wertvolles Produkt ist.

## Aufgabe der Erfindung

Es ist also die Aufgabe der vorliegenden Erfindung, entsprechende partikelförmige Kohlenstoffmaterialien sowie Verfahren zu ihrer Herstellung bereitzustellen, um so die vorstehend beschriebenen partikelförmigen Kohlenstoffmaterialien bereitstellen zu können.

## Kurze Beschreibung der Erfindung

Diese Aufgabe wird durch die in den Ansprüchen definierten Gegenstände gelöst. Bevorzugte Ausgestaltungen und weitere Aspekte der vorliegenden Erfindung ergeben sich durch die in den weiteren Ansprüchen und der folgenden detaillierten Beschreibung angegebenen Ausführungsformen.

Insbesondere ist ein erster Gegenstand der vorliegenden Erfindung ein partikelförmiges Kohlenstoffmaterial, welches

- einen $^{14}$C-Gehalt von größer als 0,20 Bq/g Kohlenstoff, jedoch von kleiner als 0,45 Bq/g Kohlenstoff,
- einen D50 der Korngrößenverteilung von weniger als 500 $\mu$m und von mehr als 0,5 $\mu$m, und
- eine OH Gruppendichte von mindestens 0,05 mmol/g und maximal 0,4 mmol/g, aufweist, und wobei
- die Löslichkeit des partikelförmigen Kohlenstoffmaterials in alkalischen Flüssigkeiten bei weniger als 25% liegt, wobei die Löslichkeit bestimmt wird gemäß der hierin beschriebenen Methode.

Ein weiterer Gegenstand der vorliegenden Offenbarung ist ein Verfahren zur Herstellung des erfindungsgemäßen partikelförmigen Kohlenstoffmaterials, welches wenigstens zwei Prozessschritte beinhaltet, wobei in einem ersten Prozessschritt ein partikelförmiges Kohlenstoffmaterial pKM bereitgestellt wird, welches eine Vorstufe des erfindungsgemäßen partikelförmigen Kohlenstoffmaterials darstellt und von diesem verschieden ist, welches im Anschluss in einem zweiten Prozessschritt durch Erhitzen in der Gasatmosphäre modifiziert wird, wodurch dann das erfindungsgemäße partikelförmige Kohlenstoffmaterial erhältlich ist, welches vorzugsweise geruchsreduziert ist.

Ein weiterer Gegenstand der vorliegenden Erfindung ist eine Verwendung des partikelförmigen Kohlenstoffmaterials als Zusatz in Polymermischungen, insbesondere Kautschukmischungen wie Elastomermischungen.

Ein weiterer Gegenstand der vorliegenden Erfindung ist ein vulkanisierbare Kautschukzusammensetzung umfassend wenigstens einen Kautschuk und wenigstens eine Füllstoffkomponente, wobei die Füllstoffkomponente wenigstens das erfindungsgemäße partikelförmige Kohlenstoffmaterial enthält.

Ein weiterer Gegenstand der vorliegenden Erfindung ist ein durch Vulkanisation der vulkanisierbaren Kautschukzusammensetzung erhältliche vulkanisierte Kautschukzusammensetzung, die eine Quellung in alkalischen Flüssigkeiten nach 7 Tagen von weniger als 25% aufweist, wobei die Quellung bestimmt wird gemäß DIN ISO 1817:2015 in 0,1 M NaOH.

## Detaillierte Beschreibung der Erfindung

Das Verfahren der vorliegenden Offenbarung erlaubt die Herstellung feinteiliger, geruchsreduzierter und/oder OH-Gruppen reduzierter (d.h. mit reduzierter Polarität) partikelförmiger Kohlenstoffmaterialien hergestellt aus Ausgangsstoffen die auf nachwachsenden Rohstoffen basieren. Solche partikelförmigen Kohlenstoffmaterialien sind wie vorstehend erwähnt ein weiterer Gegenstand der vorliegenden Erfindung.

Kennzeichnend für das Verfahren ist beispielsweise, dass in einem ersten Prozessschritt bevorzugt ein feinteiliges, partikelförmiges Kohlenstoffmaterial (im folgenden pKM) gewonnen wird, dessen Geruch in einem zweiten Prozessschritt reduziert wird wodurch das geruchsreduzierte pKM gewonnen wird.

Kennzeichnend für das Verfahren ist beispielsweise, dass in einem ersten Prozessschritt ein feinteiliges, partikelförmiges Kohlenstoffmaterial (im folgenden pKM) gewonnen wird, dessen OH-Gruppendichte (insbesondere auf der Oberfläche des Materials) in einem zweiten Prozessschritt reduziert, bevorzugt eingestellt wird wodurch das OH-Gruppen reduziertes pKM gewonnen wird.

Durch das Verfahren kann auch ein pKM gewonnen werden, welches einen reduzierten Geruch und eine reduzierte OH-Gruppendichte, bevorzugt eingestellte OH-Gruppendichte, aufweist. Insofern kann der zweite Prozessschritt eine Geruchsreduktion mit einer Reduktion, bevorzugt Einstellung der OH-Gruppendichte kombinieren. Im Folgenden soll unter modifiziertem pKM ein geruchsreduziertes oder OH-Gruppen reduziertes oder ein sowohl geruchsreduziertes also auch OH-Gruppen reduziertes pKM verstanden werden. Das modifizierte pKM oder das feinteilige modifizierte pKM stellt somit erfindungsgemäßes partikelförmiges Kohlenstoffmaterial dar und wird nach dem zweiten Prozessschritt erhalten. Feinteiliges pKM oder pKM (jeweils noch nicht modifiziert) stellt somit eine Vorstufe des erfindungsgemäßen partikelförmigen Kohlenstoffmaterials dar und wird nach dem ersten Prozessschritt erhalten und in dem zweiten Prozessschritt eingesetzt.

Das feinteilige pKM wird im ersten Prozessschritt vorzugsweise in Gegenwart einer Flüssigkeit, besonders bevorzugt in Gegenwart von Wasser gewonnen, und im zweiten Prozessschritt vorzugsweise in einer Gasatmosphäre in das modifizierte pKM überführt. Erfindungsgemäß erfolgt zwischen dem ersten und dem zweiten Prozessschritt vorzugsweise eine Abtrennung von Flüssigkeit von dem feinteiligen pKM.

Sowohl das erfindungsgemäße partikelförmige Kohlenstoffmaterial (modifiziertes pKM) als auch seine Vorstufe (pKM) werden wird im Rahmen der vorliegenden Erfindung vorzugsweise jeweils auch als "feinteilig" bezeichnet. Der Begriff "feinteilig" wird nachstehend in Abhängigkeit von BET-Oberfläche, STSA-Oberfläche und D50 der Korngrößenverteilung definiert. Besonders bevorzugt bedeutet "feinteilig" im Sinne der vorliegenden Erfindung, dass das jeweilige partikelförmige Kohlenstoffmaterial einen D50 (D50-Wert) der Korngrößenverteilung von weniger als 500 $\mu$m und mehr als 0,5 $\mu$m aufweist. Diese Feinteiligkeit wird wie nachstehend auch als KGV-Feinteiligkeit bezeichnet.

Wie vorstehend bereits erwähnt wird das erfindungsgemäße partikelförmige Kohlenstoffmaterial im Rahmen der vorliegenden Erfindung vorzugsweise auch als "modifiziertes" partikelförmiges Kohlenstoffmaterial oder modifiziertes pKM bezeichnet. Der Begriff "modifiziert" bedeutet in diesem Sinne, dass das Kohlenstoffmaterial aus einem als Ausgangsmaterial eingesetzten feinteiligen partikelförmigen Kohlenstoffmaterial pKM erhalten worden ist, welches von dem erfindungsgemäßen partikelförmigen Kohlenstoffmaterial verschieden ist. Das erfindungsgemäße partikelförmige Kohlenstoffmaterial unterscheidet sich insbesondere dadurch von dem als Ausgangsmaterial eingesetzten feinteiligen partikelförmigen Kohlenstoffmaterial pKM, dass es durch Erhitzen des Ausgangsmaterials in einer Gasatmosphäre erhältlich ist. Durch das Erhitzen wird die vorgenannte Modifizierung erzielt. Das erfindungsgemäße partikelförmige Kohlenstoffmaterial wird im Rahmen der vorliegenden Erfindung vorzugsweise auch als feinteiliges modifiziertes partikelförmiges Kohlenstoffmaterial bezeichnet. Die vorstehenden Ausführungen gelten diesbezüglich kumulativ.

Erfindungsgemäß wird die Morphologie des feinteiligen pKM im zweiten Prozessschritt vorzugsweise nur marginal verändert. Für das vorliegende Verfahren und das erfindungsgemäße partikelförmige Kohlenstoffmaterial ist also kennzeichnend, dass die Feinteiligkeit des modifizierten pKM im Wesentlichen bereits nach dem ersten Prozessschritt erhalten wird. Insofern wird die zweite Prozessstufe des vorliegenden Verfahrens so ausgestaltet, dass die Feinteiligkeit des pKM nur unwesentlich verändert wird und im Wesentlichen der Geruch des feinteiligen pKM reduziert und/oder die OH-Gruppendichte des feinteiligen pKM reduziert bzw. eingestellt wird.

Es hat sich als vorteilhaft erwiesen, wenn das feinteilige pKM nach dem ersten Prozessschritt eine BET-Oberfläche von mindestens 5 m$^2$/g, bevorzugt mindestens 8 m$^2$/g, weiter bevorzugt mindestens 10 m$^2$/g, darüber hinaus bevorzugt mindestens 15 m$^2$/g, besonders bevorzugt mindestens 20 m$^2$/g, darüber hinausbevorzugt mindestens 30 m$^2$/g, insbesondere mindestens 35 m$^2$/g oder mehr aufweist. Vorteilhaft liegt die BET Oberfläche bei maximal 200 m$^2$/g bevorzugt bei maximal 180 m$^2$/g, weiter bevorzugt bei maximal 150 m$^2$/g, besonders bevorzugt bei maximal 120 m$^2$/g. Im Folgenden wird die über die BET Oberfläche beschriebene Feinteiligkeit BET-Feinteiligkeit genannt.

Vorteilhaft weicht die BET-Oberfläche des feinteiligen pKM nur um maximal 20% bevorzugt um maximal 15% weiter bevorzugt um maximal 10% von seiner STSA-Oberfläche ab. Das pKM ist also bevorzugt wenig porös. Alternativ zur Messung der BET-Oberfläche kann auch die STSA-Oberfläche verwendet werden. Im Folgenden wird die über die STSA Oberfläche beschriebene Feinteiligkeit STSA-Feinteiligkeit genannt.

Weiterhin hat es sich als vorteilhaft erwiesen, wenn das feinteilige pKM nach dem ersten Prozessschritt einen D50 der Korngrößenverteilung von weniger als 500 $\mu$m aufweist, bevorzugt von weniger als 250 $\mu$m, weiter bevorzugt von weniger als 100 $\mu$m, besonders bevorzugt 50 $\mu$m aufweist. Vorteilhaft liegt der D50 der Korngrößenverteilung des feinteiligen pKM bei mehr als 0,5 $\mu$m, weiter bevorzugt bei mehr als 1 $\mu$m, besonders bevorzugt bei mehr als 5 $\mu$m, darüber

hinaus bevorzugt bei mehr als 10 μm. D50 bedeutet, dass 50% der Partikel kleiner sind als der angegebene Wert. Im Folgenden wird die über die Korngrößenverteilung beschriebene Feinteiligkeit KGV-Feinteiligkeit genannt.

Die Feinteiligkeit des feinteiligen pKM und des modifizierten pKM kann demnach durch seine KVG-Feinteiligkeit und/oder BET-Feinteiligkeit und/oder STSA-Feinteiligkeit beschrieben werden.

Eine Ausgestaltung des Verfahrens ist dadurch gekennzeichnet, dass

- in einem ersten Prozessschritt in Gegenwart einer Flüssigkeit ein feinteiliges pKM gewonnen wird,
- welches in einem zweiten Prozessschritt in einer Gasatmosphäre in ein modifiziertes pKM überführt wird,
- zwischen dem ersten Prozessschritt und dem zweiten Prozessschritt eine Abtrennung von Flüssigkeit von dem feinteiligen pKM erfolgt,
- die Feinteiligkeit des modifizierten pKMs nach dem zweiten Prozessschritt um maximal das 5-fache kleiner ist, als die Feinteiligkeit des feinteiligen pKM vor dem zweiten Prozessschritt und/oder
- der Geruch des modifiziertem pKM nach dem zweiten Prozessschritt gegenüber dem Geruch des feinteiligen pKM vor der zweiten Prozessstufe reduziert ist und/oder
- die OH-Gruppendichte des modifiziertem pKM nach dem zweiten Prozessschritt gegenüber der OH-Gruppendichte des feinteiligen pKM vor der zweiten Prozessstufe reduziert ist.

Die Feinteiligkeit des pKM nimmt während des zweiten Prozessschrittes um maximal das 5-fache, bevorzugt um maximal das 4-fache, 3-fache, 2,5-fache, 2-fache, 1,75-fache, 1,5-fache, 1,4-fache, 1,3-fache, 1,2-fache, 1,1-fache ab.

Mit einer Abnahme der Feinteiligkeit ist gemeint, dass

- der D50 der Korngrößenverteilung des modifizierten pKM um maximal das 5-fache, bevorzugt maximal das das 4-fache, 3-fache, 2,5-fache, 2-fache, 1,75-fache, 1,5-fache, 1,4-fache, 1,3-fache, 1,2-fache, 1,1-fache größer ist, als der D50 der Korngrößenverteilung des feinteiligen pKM und/oder
- die BET-Oberfläche des modifizierten pKM um maximal 100%, bevorzugt um maximal das 5-fache, bevorzugt maximal das das 4-fache, 3-fache, 2,5-fache, 2-fache, 1,75-fache, 1,5-fache, 1,4-fache, 1,3-fache, 1,2-fache, 1,1-fache kleiner ist, als die BET-Oberfläche des feinteiligen pKM und/oder
- die STSA-Oberfläche des modifizierten pKM um maximal 100%, bevorzugt um maximal das 5-fache, bevorzugt maximal das das 4-fache, 3-fache, 2,5-fache, 2-fache, 1,75-fache, 1,5-fache, 1,4-fache, 1,3-fache, 1,2-fache, 1,1-fache kleiner ist, als die STSA-Oberfläche des feinteiligen pKM.

Bevorzugt ist der Faktor, um den die BET-Oberfläche oder die STSA-Oberfläche im zweiten Prozessschritt abnimmt, kleiner als der Faktor, um den der D50 der Korngrößenverteilung im zweiten Prozessschritt zunimmt.

Weiterhin hat es sich als vorteilhaft erwiesen, wenn das feinteilige pKM nach dem ersten Prozessschritt einen Aschegehalt von weniger als 15 Ma%, bevorzugt weniger als 12 Ma%, 10 Ma%, 8 Ma%, 6 Ma%, 5 Ma%, 4 Ma%, 3 Ma%, 2 Ma% aufweist. Vorteilhaft liegt der Aschegehalt des feinteiligen pKM bei mehr als 0,25 Ma%, bevorzugt mehr als 0,5 Ma%, weiter bevorzugt mehr als 0,75 Ma%.

Das feinteilige pKM zeigt darüber hinaus bevorzugt einen Kohlenstoffanteil (bezogen auf die aschefreie Trockensubstanz (den aschefreien Trockenstoffgehalt)) von 40 bis 80 Masse-% (Ma%), bevorzugt von 50 bis 80 Ma%, stärker bevorzugt 60 bis weniger als 80 Ma%.

Das feinteilige pKM zeigt darüber hinaus bevorzugt eine OH Gruppendichte von mindestens 0,1 mmol/g bevorzugt mindestens 0,15 mmol/g, besonders bevorzugt mindestens 0,2 mmol/g und maximal 0,6 mmol/g, bevorzugt maximal 0,55 mmol/g, besonders bevorzugt maximal 0,5 mmol/g.

Das feinteilige pKM zeigt weiterhin bevorzugt eine OH Gruppendichte von mindestens 1 OH/nm$^2$ BET Oberfläche bevorzugt mindestens 1,5 OH/nm$^2$ BET Oberfläche, besonders bevorzugt mindestens 1,75 OH/nm$^2$ BET Oberfläche und maximal 15 OH/nm$^2$ BET Oberfläche, bevorzugt maximal 12 OH/nm$^2$ BET Oberfläche, besonders bevorzugt maximal 10 OH/nm$^2$ BET Oberfläche. Die Bestimmung der OH-Gruppendichte (sowohl in mmol/g als auch in OH/nm$^2$) auf der Materialoberfläche erfolgt gemäß Sipponen et al. (Determination of surfaceaccesible acidic hydroxyls and surface area of lignin by cationic dye adsorption; Bioresource Technology, 2014, 169: 80-87).

Im Weiteren werden bevorzugte Ausführungsformen des ersten Prozessschrittes zur Gewinnung eines feinteiligen pKM beschrieben. Dabei ist es im Rahmen der vorliegenden Erfindung nicht relevant, ob dieser erste Prozessschritt direkt vor dem zweiten Prozessschritt durchgeführt wird oder ob dieser erste Schritt zeitlich deutlich vor dem zweiten erfolgt (so dass beispielsweise das pKM aus dem ersten Schritt separat hergestellt und dann gelagert oder transportiert wird, bevor es dem zweiten Schritt unterworfen wird).

Bevorzugt wird das feinteilige pKM im ersten Prozessschritt durch Fällung eines ganz oder teilweise in einer Flüssigkeit gelösten Ausgangstoffes gewonnen.

Bevorzugt wird der Ausgangsstoff dazu vor dem ersten Prozessschritt ganz oder teilweise in einer Flüssigkeit, bevorzugt in Wasser, gelöst. Weiter bevorzugt besteht der gelöste Ausgangsstoff vor dem ersten Prozessschritt zu mehr als 50% bevorzugt zu mehr als 60%, 70%, 75%, 80%, 85% aus Zuckern (Kohlehydrate), Stärken oder Lignin.

Die Bestimmung des Gehaltes an Zucker erfolgt in Anlehnung an In Anlehnung an TAPPI T 249 cm-00.

Die Bestimmung des Gehaltes an Stärke erfolgt in Anlehnung an TAPPI T 419.

Die Bestimmung des Gehalts an Klason Lignin erfolgt in Anlehnung an TAPPI T222 om-02. Die Bestimmung des Gehalts an säurelöslichem Lignin erfolgt in Anlehnung an TAPPI UM 250. Mit Ligningehalt wird im Folgenden die Summe aus Klason und säurelöslichem Lignin bezeichnet.

Lignocelluloshaltige Flüssigkeiten, die beispielsweise als Ausgangsmaterial geeignet sind, fallen z.B. als Abfallprodukte in der Zellstoffindustrie an, in der große Mengen an Holz verarbeitet werden. Je nach Prozess der Holzverarbeitung fällt es in großen Mengen als KRAFT-Lignin, in der Regel gelöst in Schwarzlauge, Hydrolyse-Lignin oder Lignin-Sulfonat an. Je nach pH-Wert im jeweiligen Verarbeitungsprozess können in den für Lignin typischen Hydroxyl-Gruppen die Wasserstoffatome anteilig durch Metallkationen ersetzt sein. Das Ligninsulfonat ist genau genommen bereits ein chemisches Derivat des Lignins, da es über zusätzliche, während der Verarbeitung eingefügte Sulfonat-Gruppen verfügt.

In einer Ausführungsform des vorliegenden Verfahrens wird entsprechend Schwarzlauge als lignocelluloshaltige Flüssigkeit als Ausgangsmaterial verwendet. Schwarzlauge ist eine Lignin beinhaltenden Flüssigkeit die als Ablauge in einem alkalischen Fraktionierungsprozess für Biomasse, z.B. in einem KRAFT-Prozess oder einem Hydroxyd-Prozess, anfällt. Der pH-Wert der Schwarzlauge liegt im alkalischen Bereich, in der Regel bei einem pH-Wert von 12-14. Schwarzlauge kann neben Lignin noch weitere organische und anorganische Bestandteile enthalten. Kennzeichnend für Schwarzlauge ist, dass der Ligninanteil an der organischen Trockenmasse bei über 50%, insbesondere bei über 60% oder sogar bei über 70%, und damit deutlich über dem Ligninanteil von holziger Biomasse liegt, der bei 15% - 35% liegt.

Besteht der Ausgangstoff zu mehr als 50% aus Lignin, dann wird das feinteilige pKM bevorzugt durch Fällung von ganz oder teilweise in einer Flüssigkeit gelöstem Lignin durch Einleitung eines sauren Gases und/oder durch Zugabe einer Säure und/oder durch Fällung gewonnen. Solche Verfahren sind dem Fachmann grundsätzlich bekannt und in WO2006031175 oder WO2006038863 oder WO2009104995 beschrieben. Vorteilhaft werden diese Verfahren so gesteuert, das nach dem ersten Prozessschritt ein feinteiliges pKM charakterisiert durch Korngrößenverteilung, BET-Oberfläche und/oder STSA-Oberfläche wie oben beschrieben vorliegt.

Besteht der Ausgangstoff zu mehr als 50% aus Lignin, dann wird das feinteilige pKM alternativ bevorzugt durch Fällung und gleichzeitiger Stabilisierung bei Bedingungen einer hydrothermalen Carbonisierung (HTC) gewonnen Solche Verfahren sind dem Fachmann grundsätzlich bekannt und in WO2016/020383 oder WO2017/085278 (Fällung und gleichzeitige Stabilisierung) beschrieben. Vorteilhaft werden diese Verfahren so gesteuert, das nach dem ersten Prozessschritt ein feinteiliges pKM charakterisiert durch Korngrößenverteilung, BET-Oberfläche und/oder STSA-Oberfläche wie oben beschrieben vorliegt.

Alternativ bevorzugt wird das feinteilige pKM im ersten Prozessschritt durch Hydrolyse aus einem festem Ausgangsstoff, bevorzugt aus Holz oder Stroh gewonnen. Hierbei wird der feste Ausgangsstoff vor und/oder während der Hydrolyse soweit zerkleinert, dass er nach dem ersten Prozessschritt als feinteiliges pKM charakterisiert durch Korngrößenverteilung, BET-Oberfläche und/oder STSA-Oberfläche, wie oben beschrieben, vorliegt. Da während der Hydrolyse die im Ausgangsstoff enthaltenen Kohlehydrate in Lösung übergehen, hat das feinteilige pKM einen gegenüber dem Ausgangsstoff erhöhten Ligninanteil. Solche durch Hydrolyse gewonnenen feinteiligen pKM haben vorteilhaft einen Ligninanteil von mehr als 60 Ma%, bevorzugt mehr als 65 Ma% besonders bevorzugt von mehr als 70 Ma%. Vorteilhaft werden diese Verfahren so gesteuert, das nach dem ersten Prozessschritt ein feinteiliges pKM charakterisiert durch Korngrößenverteilung, BET-Oberfläche und/oder STSA-Oberfläche wie oben beschrieben vorliegt.

Im Weiteren werden bevorzugte Ausführungsformen des zweiten Prozessschrittes beschrieben. Wie vorstehend erwähnt kann das feinteilige pKM, welches nach dem ersten Prozessschritt erhalten wird, mittels des zweiten Prozessschrittes in ein erfindungsgemäßes feinteiliges modifiziertes pKM überführt werden.

Das pKM wird im zweiten Prozessschritt in einer Gasatmosphäre in das modifizierte pKM überführt.

Vorteilhaft läuft der zweite Prozessschritt nicht unter atmosphärischer Luft ab, sondern unter einer Verfahrensatmosphäre. Unter Verfahrensatmosphäre wird beispielsweise verstanden:

- eine mittels Inertgase angereicherte Luft, die einen Sauerstoffgehalt von weniger als 15 Vol.-%, bevorzugt von unter 10 Vol.-%, weiter bevorzugt von weniger als 5 Vol.-%, besonders bevorzugt von weniger als 3 Vol.-% aufweist; Der absolute Druck der mittels Inertgas angereicherten Luft kann nach Bedarf gewählt werden und beträgt bevorzugt maximal 2000 mbar, weiter bevorzugt maximal 1500 mbar und bevorzugt mindestens 100 mbar, weiter bevorzugt mindestens 200 mbar, 250 mbar, 500 mbar, 750 mbar.

- ein Inertgas; Der absolute Druck des Inertgases kann nach Bedarf gewählt werden und beträgt bevorzugt maximal 2000 mbar, weiter bevorzugt maximal 1500 mbar und bevorzugt mindestens 100 mbar, weiter bevorzugt mindestens 200 mbar, 250 mbar, 500 mbar, 750 mbar.

- eine im Druck reduzierte Luft mit einem Druck von weniger als 750 mbar, bevorzugt bei weniger als 500 mbar, weiter bevorzugt weniger als 250 mbar, in einigen Fällen bei weniger als 100 mbar.

Vorteilhaft beträgt der Sauerstoffgehalt einer Verfahrensatmosphäre bestehend aus mittels Inertgas angereicherten Luft mindestens 0,1 Vol.-%, bevorzugt mindestens 0,5 Vol.-% besonders bevorzugt mindestens 1 Vol.-% betragen.

Ein geeignetes Inertgas im Sinne der vorliegenden Erfindung ist insbesondere Stickstoff, Kohlendioxid, überhitzter Wasserdampf oder aus dem pKM während des zweiten Prozessschrittes freiwerdende Gase. Obwohl das, während des zweiten Prozessschrittes aus dem pKM freiwerdende, Gas auch beispielsweise Kohlenmonoxid, Wasserstoff, Methan, oder Schwefelwasserstoff, etc. enthält, wird es in dieser Schrift als Inertgas bezeichnet. Der Druck kann bei Einsatz einer mittels Inertgas angereicherten Luft oder bei Einsatz von Inertgas als Verfahrensatmosphäre, wie bereits vorstehend ausgeführt je nach Möglichkeiten oder Bedarf ausgewählt werden. Apparativ am einfachsten ist eine Verfahrensführung bei Umgebungsdruck oder lediglich geringem Unterdruck oder Überdruck, beispielweise bei +-50, bevorzugt +- 25 mbar, besonders bevorzugt +-10 mbar.

Der zweite Prozessschritt wird vorzugsweise so gesteuert (beispielsweise durch Auswahl des Temperaturverlaufs, der maximalen Temperatur, der Verfahrensatmosphäre, ggf. der Auswahl des Drucks), dass der Masseverlust des pKM im zweiten Prozessschritt weniger als 20%, bevorzugt weniger als 15%, stärker bevorzugt weniger als 10%, 9%, 8%, 7%, 6%, 5%, 4%, 3% oder weniger beträgt. Ein gewisser Masseverlust ist während des zweiten Prozessschrittes des erfindungsgemäßen Verfahrens erforderlich, um den Gehalt an geruchsintensiven Substanzen zu verringern und/oder die OH-Gruppendichte zu reduzieren, bevorzugt einzustellen. Dieser Masseverlust wird üblicher Weise mindestens 1% oder mehr, bevorzugt mindestens 2% oder mehr in einigen Fällen 5% oder mehr betragen. Damit wird sichergestellt und erreicht, dass nicht zu viel Material verloren geht und andererseits die gewünschte Geruchsreduzierung und/oder Reduzierung der OH-Gruppendichte erreicht wird. So kann dann auch die Eignung des modifizierten pKM zum Einsatz als beispielweise Füllstoff beispielsweise in Elastomeren gesichert werden.

Unabhängig von der Auswahl der Verfahrensatmosphäre des zweiten Prozessschrittes sollte die Verfahrenstemperatur im zweiten Prozessschritt eine Minimaltemperatur überschreiten und einen Maximaltemperatur nicht überschreiten. Die Maximaltemperatur ist 300°C, bevorzugt 250°C oder weniger, stärker bevorzugt 240°C besonders bevorzugt 235°C oder weniger, darüber hinaus bevorzugt 230°C oder weniger, insbesondere bevorzugt 225°C, in einigen bevorzugten Fällen 220°C, darüber hinaus bevorzugt auch 210°C, in selten Fällen auch 200°C oder weniger. Die Minimaltemperatur ist 80°C, bevorzugt 100°C, bevorzugt 120°C, bevorzugt, 130°C oder mehr, weiter bevorzugt 150°C oder mehr, besonders bevorzugt 160°C oder mehr, insbesondere bevorzugt 170°C oder mehr, in einigen Fällen 180°C oder mehr. Die Haltezeit, bei der das pKM im zweiten Prozessschritt bei der Verfahrenstemperatur in der Verfahrensatmosphäre gehalten wird, kann über einen breiten Bereich gewählt werden. Geeignete Werte sind 1 Sekunde und mehr sowie 5 Stunden oder weniger. Bevorzugt beträgt die Haltezeit 60 Minuten oder weniger, weiter bevorzugt 30 Minuten oder weniger, besonders bevorzugt 15 Minuten oder weniger, in einigen Fällen weniger als 10 Minuten. Mit der Haltezeit ist bei kontinuierlicher Fahrweise des zweiten Prozessschrittes die mittlere Verweilzeit gemeint.

Bevorzugt wird die OH-Gruppendichte des feinteiligen pKM während des zweiten Prozessschrittes eingestellt. Vorteilhaft erfolgt diese Einstellung durch die Auswahl der Verfahrenstemperatur bevorzugt in Kombination mit der Verfahrensatmosphäre, besonders bevorzugt durch die Einstellung des Sauerstoffgehalts der Verfahrensatmosphäre.

Durch die Kombination einer niedrigen Verfahrenstemperatur, beispielsweise von bevorzugt unter 250°C, stärker bevorzugt unter 240°C, besonders bevorzugt unter 235°C oder weniger, darüber hinaus bevorzugt unter 230°C, insbesondere bevorzugt unter 225°C, in einigen bevorzugten Fällen unter 220°C, darüber hinaus bevorzugt auch unter 210°C, in selten Fällen auch unter 200°C mit einer Einstellung des Sauerstoffgehaltes kann die OH-Gruppendichte gezielt eingestellt werden, ohne dass das Material einer hohen thermischen Belastung ausgesetzt ist. Hierdurch wird die Feinteiligkeit bestmöglich erhalten, der Geruch bestmöglich reduziert und zusätzlich die OH-Gruppendichte eingestellt.

Als vorteilhaft hat es sich herausgestellt, dass das pKM im zweiten Prozessschritt nicht nur während der Haltezeit unter der Verfahrensatmosphäre behandelt wird, sondern auch die Aufheizung und Abkühlung unter der Verfahrensatmosphäre erfolgt.

Wurde des pKM im ersten Prozessschritt beispielsweise durch Fällung mit kombinierter Stabilisierung unter Bedingungen einer hydrothermalen Karbonisierung aus Weichholzlignin gewonnen, so kann mit einem zweiten Prozessschritt beispielsweise bei einer Maximaltemperatur der Behandlung von 250°C oder weniger ein Masseverlust von lediglich 10% oder weniger, bei einem gleichzeitigen Verlust an BET-Oberfläche von etwa 5 $m^2$/g oder weniger (wenn also das pKM eine BET-Oberfläche von 40 $m^2$/g hat fällt diese maximal auf 35 $m^2$/g ab) erreicht werden. Gleichzeitig zeigen Geruchsüberprüfungen einen signifikanten Abfall unangenehmer Geruchsentwicklung. Dabei wurde dieser Abfall am geruchsreduzierten pKM an sich, während der Herstellung eines Gummiartikels welches mit dem geruchsreduzierten pKM gefüllt war als auch am Gummiartikel im Vergleich zu einem mit einem pKM, welches den zweiten Prozessschritt nicht durchlaufen hatte festgestellt.

Das hierin offenbarte Verfahren kann also eine gute Balance zwischen erwünschter Geruchsminimierung und/oder Reduzierung der OH-Gruppendichte und gleichzeitigem weitgehenden Erhalt der erwünschten Materialeigenschaften sowie geringem Masseverlust erreichen. Dabei ist weder ein Einsatz an Prozesschemikalien notwendig noch aufwändige Verfahren. Auch liegt die Maximaltemperatur der erfindungsgemäßen Behandlung in einem vergleichsweise niedrigen Bereich, was sowohl im Hinblick auf Kosten als auch im Hinblick auf Verfahrenssteuerung vorteilhaft ist.

Bevorzugt wird der zweite Prozessschritt in einer bewegten Schüttung, in einer Wirbelschicht oder in einem Flugstrom durchgeführt. Weiter bevorzugt kann der zweite Prozessschritt mit der Abtrennung von Flüssigkeit kombiniert werden. Vorteilhaft erfolgt die Abtrennung von Flüssigkeit zumindest teilweise durch deren Verdampfung. Vorteilhaft erfolgt die Verdampfung von Flüssigkeit bevorzugt bis zu einem Trockenstoffgehalt von >80% bevorzugt >85% in einer Art, dass das feinteilige pKM während der Verdampfung eine Temperatur von mindestens 35°C, bevorzugt mindestens 40°C erreicht.

Vorteilhaft erfolgt die Verdampfung von Flüssigkeit bevorzugt zu einem Trockenstoffgehalt von >80% bevorzugt >85% in einer Art in einer Art, dass das feinteilige pKM während der Verdampfung eine Temperatur von maximal 130°C, bevorzugt maximal 125°C, weiter bevorzugt maximal 120°C, besonders bevorzugt maximal 115°C erreicht, darüber hinaus bevorzugt maximal 95°C, insbesondere maximal 90°C erreicht. Vorteilhaft wird das feinteilige pKM erst mit einem Trockenstoffgehalt von mehr als 85%, weiter bevorzugt mehr als 90%, besonders bevorzugt mehr als 95 Ma% auf die Verfahrenstemperatur des zweiten Prozessschrittes erhitzt.

Wie bereits vorstehend beschrieben, werden die erfindungsgemäß erhaltenen modifizierte pKM, bevorzugt basierend auf Lignin und bevorzugt erhalten durch eine Fällung oder eine Fällung mit kombinierter Stabilisierung beispielweise bei Bedingungen einer hydrothermalen Karbonisierung auch für den Einsatz in Kautschukmischungen vorgeschlagen.

Im Rahmen der vorliegenden Erfindung hat sich auch gezeigt, dass erfindungsgemäß hergestellte modifizierte pKM außerdem in der Polarität bzw. Hydrophobizität verändert sind und zum Beispiel für die Anwendung in hydrophoben bzw. wenig polaren Elastomercompound kompatibler sind als pKM die nach dem Stand der Technik hergestellt sind. Bevorzugt quellen Elastomercompound mit modifiziertem pKM nur bedingt in alkalischen Flüssigkeiten. Bevorzugt liegt die Massenzunahme des Elastomercompounds mit modifiziertem pKM nach 7 Tagen im Medium bei weniger als 25%, bevorzugt bei weniger als 15%, besonders bevorzugt bei weniger als 10%.

Wie vorstehend erwähnt ist der erste Gegenstand der vorliegenden Erfindung ein modifiziertes pKM, welches insbesondere durch das hierin offenbarte Verfahren bereitgestellt wird, nämlich ein partikelförmiges Kohlenstoffmaterial, welches

◦ einen $^{14}$C-Gehalt von größer als 0,20 Bq/g Kohlenstoff, jedoch von kleiner als 0,45 Bq/g Kohlenstoff,
◦ einen D50 der Korngrößenverteilung von weniger als 500 μm und von mehr als 0,5 μm, und
◦ eine OH Gruppendichte von mindestens 0,05 mmol/g und maximal 0,4 mmol/g, aufweist, und wobei
◦ die Löslichkeit des partikelförmigen Kohlenstoffmaterials in alkalischen Flüssigkeiten bei weniger als 25% liegt, wobei die Löslichkeit bestimmt wird gemäß der hierin beschriebenen Methode.

Vorzugsweise weist das erfindungsgemäße partikelförmige Kohlenstoffmaterial,

- einen $^{14}$C-Gehalt von größer als 0,23 Bq/g Kohlenstoff, bevorzugt jedoch kleiner als 0,45 Bq/g Kohlenstoff und/oder
- einen Kohlenstoffgehalt bezogen auf die aschefreie Trockensubstanz zwischen 60 Ma.-% und 80 Ma.-% und/oder
- keinen nach DIN 53765-1994 messbaren Glasübergangstemperatur und/oder
- einem Gehalt an flüchtigen Bestandteilen gemessen bei 950°C nach DIN53552 von mehr als 30 Ma.-% und/oder
- einem Gehalt an flüchtigen Bestandteilen gemessen bei 200°C nach DIN53552 von weniger als 5 Ma.-%, auf.

Vorteilhaft liegt die BET-Oberfläche des modifizierten pKM bei mindestens 5 m$^2$/g, bevorzugt mindestens 8 m$^2$/g, weiter bevorzugt mindestens 10 m$^2$/g, darüber hinaus bevorzugt mindestens 15 m$^2$/g, besonders bevorzugt mindestens 20 m$^2$/g, darüber hinausbevorzugt mindestens 30 m$^2$/g, insbesondere mindestens 35 m$^2$/g oder mehr. Vorteilhaft liegt die BET Oberfläche des modifizierten pKM bei maximal 200 m$^2$/g bevorzugt bei maximal 180 m$^2$/g, weiter bevorzugt bei maximal 150 m$^2$/g, besonders bevorzugt bei maximal 120 m$^2$/g.

Vorteilhaft weicht die BET-Oberfläche des modifizierten pKM nur um maximal 20% bevorzugt um maximal 15% weiter bevorzugt um maximal 10% von seiner STSA-Oberfläche ab. Das modifizierte pKM ist also bevorzugt wenig porös.

Der D50 der Korngrößenverteilung des modifizierten pKM liegt bei weniger als 500 μm, bevorzugt bei weniger als 250 μm, weiter bevorzugt bei weniger als 100 μm, besonders bevorzugt bei weniger als 50 μm. Der D50 der Korngrößenverteilung des modifizierten pKM liegt bei mehr als 0,5 μm, bevorzugt bei mehr als 1 μm, besonders bevorzugt bei mehr als 5 μm, darüber hinaus bevorzugt bei mehr als 10 μm. Ganz besonders bevorzugt liegt der D50 der Korngrößenverteilung des modifizierten pKM bei mehr als 5 μm, darüber hinaus bevorzugt bei mehr als 10 μm.

Vorteilhaft hat das modifizierte pKM einen Aschegehalt von weniger als 15 Ma%, bevorzugt weniger als 12 Ma%, 10 Ma%, 8 Ma%, 6 Ma%, 5 Ma%, 4 Ma%, 3 Ma%, 2 Ma% oder weniger. Vorteilhaft liegt der Aschegehalt des modifizierten pKM bei mehr als 0,25 Ma%, bevorzugt mehr als 0,5 Ma%, weiter bevorzugt mehr als 0,75 Ma%. Ganz besonders bevorzugt hat das modifizierte pKM einen Aschegehalt von weniger als 4 Ma%, 3 Ma%, 2 Ma% oder weniger und mehr als 0,25 Ma%, bevorzugt mehr als 0,5 Ma%, weiter bevorzugt mehr als 0,75 Ma%.

Das modifizierte pKM zeigt darüber hinaus eine OH Gruppendichte von mindestens 0,05 mmol/g bevorzugt mindestens 0,075 mmol/g, besonders bevorzugt mindestens 0,1 mmol/g. Das modifizierte pKM weist dabei eine OH Gruppendichte von maximal 0,4 mmol/g, bevorzugt maximal 0,35 mmol/g, besonders bevorzugt maximal 0,3 mmol/g, in einigen Fällen weniger als 0,25 mmol/g, in seltenen Fällen weniger als 0,2 mmol/g auf.

Das modifizierte pKM ist nur bedingt in alkalischen Flüssigkeiten löslich. Die Löslichkeit des modifizierte pKM liegt bei weniger als 25%, bevorzugt bei weniger als 15%, besonders bevorzugt bei weniger als 10%. Der lösliche Anteil wird bestimmt gemäß der nachstehend beschriebenen Methode. Vorzugsweise stellen die alkalischen Flüssigkeiten wässrige Lösungen von NaOH dar, besonders bevorzugt wässrige Lösungen mit einer Konzentration von 0,1 Mol/l.

Das modifizierte pKM weist vorzugsweise einen reduzierten Geruch auf. So ist insbesondere der Anteil der Emission an schwefelhaltigen und phenolischen Substanzen reduziert. Es konnte aber auch die Emission von einigen VOC's, wie z.B. Essigsäure, reduziert werden. Eine Methode zur Bestimmung der Emissionsmenge ist nachstehend beschrieben.

Bevorzugt hat das modifizierte pKM einen Anteil an Dimethylsulfid von maximal 1 mg/kg, bevorzugt von maximal 0,5 mg/kg, weiter bevorzugt weniger als 0,1 mg/kg, darüber hinaus bevorzugt von weniger als 0,05 mg/kg insbesondere von weniger als 0,01 mg/kg.

Bevorzugt hat das modifizierte pKM jeweils einen Anteil an Guajakol und Methylguajakol (Kreosol) von jeweils maximal 1 mg/kg, bevorzugt von maximal 0,5 mg/kg, weiter bevorzugt weniger als 0,1 mg/kg, darüber hinaus bevorzugt von weniger als 0,05 mg/kg insbesondere von weniger als 0,01 mg/kg.

Bevorzugt hat das modifizierte pKM einen Anteil an Naphthaline (DIN EN 16181:2017-11 / Entwurf) von weniger als 5 mg/kg. Bevorzugt liegt die Summe der 18 EPA-PAK exklusive BG (DIN EN 16181:2017-11 / Entwurf) bei weniger als 5 mg/kg. Bevorzugt ist kein Anteil (< 0,1 mg/kg) an Benzo(a)anthracen, Chrysen, Benzo(b)fluorathen, Benzo(k)fluranthe, Benzo(a)pyren, Indenol(1,2,3-cd)pyren, Dibenzol(a,h)anthracen, Benzol(ghi)perylen, Benzo(e)pyren und Benzo(j)fluoranthen im modifizierten pKM nachweisebar (DIN EN 16181:2017-11 / Entwurf).

Bevorzugt weist das modifizierte pKM einen Anteil der ausgasbaren Einzelverbindungen

- 2-Methoxyphenol
- Phenol
- Guajacol
- 4-Methoxy-3-methyl-phenol
- 4-Propanolguajacol
- 2-Methoxy-4-methylphenol
- 2-Methoxy-4-ethylphenol
- 4-Propylguajacol
- Methanol,

jeweils bestimmt gemäß Thermodesorptionsanalyse nach VDA 278 (05/2016), von weniger als 50 $\mu$g/g modifiziertem pKM, bevorzugt von 25 $\mu$g/g modifiziertem pKM, besonders bevorzugt von weniger als 15 $\mu$g/ modifiziertem pKM, darüber hinaus bevorzugt von weniger als 10 $\mu$g/g modifiziertem pKM,, insbesondere bevorzugt von weniger als 5 $\mu$g/g modifiziertem pKM, in einigen Fällen von weniger als 1 $\mu$g/g modifiziertem pKM, auf.

Bevorzugt liegt die OAN des modifizierten pKM höher als 150 ml/100 g besonders bevorzugt höher als 151 ml/100g insbesondere bei mehr als 151 ml/100g.

Bevorzugt liegt die OAN des modifizierten pKM niedriger als 200 ml/100 g besonders bevorzugt niedriger als 180 ml/100g insbesondere bei weniger als 170 ml/100g.

Bevorzugt liegt der elektrische Widerstand einer schwefelvernetzten mit 120 phr modifiziertem pKM gefüllten SBR Polymermischung bei mehr als 1,0 E 10 Ohm * cm.

Vorzugsweise ist das modifizierte pKM durch ein Verfahren erhältlich ist, welches wenigstens zwei Prozessschritte beinhaltet, wobei in einem ersten Prozessschritt das partikelförmige Kohlenstoffmaterial pKM bereitgestellt wird, welches eine Vorstufe des modifizierten partikelförmigen Kohlenstoffmaterials darstellt und von diesem verschieden ist, welches im Anschluss in einem zweiten Prozessschritt durch Erhitzen in der Gasatmosphäre modifiziert wird, wodurch dann das modifizierte pKM erhältlich ist, welches vorzugsweise geruchsreduziert ist.

Vorzugsweise wies das gemäß erstem Prozessschritt erhältliche partikelförmige Kohlenstoffmaterial pKM vor dem Erhitzen in der Gasatmosphäre einen D50 der Korngrößenverteilung von weniger als 500 $\mu$m und mehr als 0,5 $\mu$m auf.

Vorzugsweise wird durch das Erhitzen in der Gasatmosphäre gemäß zweitem Prozessschritt die OH-Gruppendichte des eingesetzten partikelförmigen Kohlenstoffmaterials pKM reduziert oder eingestellt, wodurch das modifizierte pKM mit einer OH-Gruppendichte wie vorstehend definiert erhältlich ist.

Vorzugsweise läuft der zweite Prozessschritt nicht unter atmosphärischer Luft ab, sondern unter einer Verfahrensatmosphäre, die aus mittels Inertgas angereicherter Luft besteht, die einen Sauerstoffgehalt von weniger als 15 Vol.-%, bevorzugt von unter 10 Vol.-%, weiter bevorzugt von weniger als 5 Vol.-%, besonders bevorzugt von weniger als 3 Vol.-% aufweist, wobei der Sauerstoffgehalt vorzugsweise mindestens 0,1 Vol.-%, besonders bevorzugt mindestens 0,5 Vol.-%, ganz besonders bevorzugt mindestens 1 Vol.-% beträgt.

Vorzugsweise wird das im ersten Prozessschritt bereitgestellte partikelförmige Kohlenstoffmaterial pKM durch Fällung eines ganz oder teilweise in einer Flüssigkeit gelösten Ausgangsmaterials, vorzugsweise eines lignin-basierten Ausgangsmaterials, gewonnen.

Vorzugsweise liegt die Verfahrenstemperatur im zweiten Prozessschritt maximal 50 °C unterhalb und maximal 50 °C oberhalb der Weiterverarbeitungstemperatur und/oder der Nutzungstemperatur und die Verfahrenstemperatur überschreitet eine Maximaltemperatur nicht und unterschreitet eine Minimaltemperatur nicht.

Vorzugsweise ist der D50 der Korngrößenverteilung des nach dem zweiten Prozessschritt erhältlichen modifizierten partikelförmigen Kohlenstoffmaterials um maximal das 5-fache, bevorzugt maximal das das 4-fache, 3-fache, 2,5-fache, 2-fache, 1,75-fache, 1,5-fache, 1,4-fache, 1,3-fache, 1,2-fache, 1,1-fache größer ist, als der D50 der Korngrößenverteilung des im ersten Prozessschritt bereitgestellten partikelförmigen Kohlenstoffmaterials pKM.

Ein weiterer Gegenstand der vorliegenden Offenbarung ist ein Verfahren zur Herstellung des erfindungsgemäßen partikelförmigen Kohlenstoffmaterials, welches wenigstens zwei Prozessschritte beinhaltet, wobei in einem ersten Prozessschritt ein partikelförmiges Kohlenstoffmaterial pKM bereitgestellt wird, welches eine Vorstufe des erfindungsgemäßen partikelförmigen Kohlenstoffmaterials darstellt und von diesem verschieden ist, welches im Anschluss in einem zweiten Prozessschritt durch Erhitzen in der Gasatmosphäre modifiziert wird, wodurch dann das erfindungsgemäße partikelförmige Kohlenstoffmaterial erhältlich ist, welches vorzugsweise geruchsreduziert ist.

Ein weiterer Gegenstand der vorliegenden Erfindung ist eine Verwendung des erfindungsgemäßen partikelförmigen Kohlenstoffmaterials als Zusatz in Polymermischungen, insbesondere Kautschukmischungen wie Elastomermischungen.

Ein weiterer Gegenstand der vorliegenden Erfindung ist ein vulkanisierbare Kautschukzusammensetzung umfassend wenigstens einen Kautschuk und wenigstens eine Füllstoffkomponente, wobei die Füllstoffkomponente wenigstens das erfindungsgemäße partikelförmige Kohlenstoffmaterial enthält.

Die Kautschukzusammensetzung kann dabei zudem wenigstens ein Vulkanisationssystem enthalten, welches wenigstens einen Vernetzer umfasst. Beispiele solcher Vernetzer sind Schwefel und/oder Peroxide. Beispiele einsetzbarer Kautschuke sind Naturkautschuk (NR; natural rubber), Halobutyl-Kautschuke, wiederum vorzugsweise gewählt aus der Gruppe bestehend aus Chlorobutyl-Kautschuken (CIIR; chloro-isobutene-isoprene rubber) und Bromobutyl-Kautschuken (BIIR; bromo-isobutene-isoprene rubber), Butyl-Kautschuk bzw. Isobutylen-Isopren-Kautschuk (IIR; isobuten isoprene rubber), Styrol-Butadien-Kautschuk (SBR, styrene butadiene rubber), wiederum vorzugsweise SSBR (lösungspolymerisiertes SBR und/oder ESBR (emulsionspolymerisiertes SBR), Polybutadien (BR, butadiene rubber), Acrylnitril-Butadien-Kautschuken (NBR, nitrile rubber) und/oder HNBR (hydrierter NBR), Chloropren (CR), Polyisopren (IR), Ethylen-Propylen-Dien-Kautschuk (EPDM), sowie Mischungen davon.

Ein weiterer Gegenstand der vorliegenden Erfindung ist ein durch Vulkanisation der vulkanisierbaren Kautschukzusammensetzung erhältliche vulkanisierte Kautschukzusammensetzung, die eine Quellung in alkalischen Flüssigkeiten nach 7 Tagen von weniger als 25% aufweist. Die Quellung wird bestimmt nach DIN ISO 1817:2015 in 0,1 mol NaOH.

**Bestimmungsmethoden**

**1.** Bestimmung des $^{14}$C-Gehalts

Die Bestimmung des $^{14}$C-Gehalts (Gehalt an biobasiertem Kohlenstoff) erfolgt mittels der Radiokarbonmethode gemäß DIN EN 16640:2017-08.

**2.** Bestimmung der Korngrößenverteilung

Die Korngrößenverteilung lässt sich mittels Laserbeugung des in Wasser dispergierten Materials (1 Gew.-% in Wasser) nach ISO 13320:2009 bestimmen. Die Angabe des Volumenanteils erfolgt z.B. als D50 in $\mu$m (Durchmesser der Körner von 50% des Volumens der Probe liegt unter diesem Wert).

**3.** Bestimmung des Kohlenstoffgehalts

Der Kohlenstoffgehalt wird durch Elementaranalyse gemäß DIN 51732: 2014-7 bestimmt.

**4.** Bestimmung des Trockenstoffgehalts

Der Trockenstoffgehalt der Probe wurde in Anlehnung an DIN 51718:2002-06 wie folgt bestimmt. Hierzu wurde die Feuchtewaage MA100 der Fa. Sartorius auf eine Trockentemperatur von 105 °C geheizt. Die trockene Probe, soweit nicht schon als Pulver vorliegend, wurde zu einem Pulver gemörsert bzw. gemahlen. Ca. 2 g der zu messenden Probe wurden auf einer passenden Aluminiumschale in der Feuchtewaage eingewogen und anschließend wurde die Messung gestartet. Sobald sich das Gewicht der Probe für 30 s nicht mehr als 1 mg änderte, galt dies Gewicht als konstant und die Messung wurde beendet. Der Trockenstoffgehalt entspricht dann dem angezeigten Gehalt der Probe in Gew.-%. Für jede Probe wurde mindestens eine Doppelbestimmung durchgeführt. Die gewichteten Mittelwerte wurden angegeben.

**5.** Bestimmung des Aschegehalts

Der wasserfreie Aschegehalt der Proben wurde gemäß der Norm DIN 51719 durch thermogravimetrische Analyse wie folgt bestimmt: Vor dem Einwiegen wurde die Probe gemahlen oder gemörsert. Vor der Aschebestimmung wird der Trockenstoffgehalt des eingewogenen Materials ermittelt. Das Probenmaterial wurde auf 0,1 mg genau in einem Tiegel eingewogen. Der Ofen wurde samt Probe mit einer Aufheizrate von 9 ° K/min auf eine Zieltemperatur von 815 °C aufgeheizt und anschließend für 2 h bei dieser Temperatur gehalten. Anschließend wurde der Ofen auf 300 °C abgekühlt bevor die Proben entnommen wurden. Die Proben wurden im Exsikkator bis auf Umgebungstemperatur abgekühlt und erneut gewogen. Die verbliebene Asche wurde in Bezug zur Einwaage gesetzt und so der gewichtsprozentuale Gehalt an Asche bestimmt. Für jede Probe wurde eine Dreifachbestimmung durchgeführt und der gemittelte Wert angegeben.

**6.** Bestimmung der BET- und STSA-Oberfläche der organischen Füllstoffe

Die spezifische Oberfläche wurde gemäß der für Industrieruße (Carbon Black) vorgesehenen Norm ASTM D 6556 (2019-01-01) durch Stickstoffadsorption bestimmt. Nach dieser Norm wurde zudem die BET-Oberfläche (spezifische Gesamtoberfläche nach Brunauer, Emmett und Teller) sowie die externe Oberfläche (STSA-Oberfläche; Statistical Thickness Surface Area) wie folgt bestimmt.

Die zu analysierende Probe wurde vor der Messung auf einen Trockensubstanz-Gehalt $\geq$ 97,5 Gew.-% bei 105 °C getrocknet. Zudem wurde die Messzelle vor Einwiegen der Probe für mehrere Stunden im Trockenofen bei 105 °C getrocknet. Die Probe wurde anschließend unter Verwendung eines Trichters in die Messzelle eingefüllt. Bei Verunreinigung des oberen Messzellenschafts während des Befüllens wurde dieser mittels einer geeigneten Bürste oder einem Pfeifenreiniger gesäubert. Bei stark fliegendem (elektrostatischem) Material wurde zusätzlich zur Probe Glaswolle eingewogen. Die Glaswolle diente dazu, während des Ausheizvorganges eventuell auffliegendes Material, welches das Gerät verschmutzen könnte, zurückzuhalten.

Die zu analysierende Probe wurde bei 150 °C für 2 Stunden ausgeheizt, der $Al_2O_3$-Standard bei 350 °C für 1 Stunde. Für die Bestimmung wurde in Abhängigkeit vom Druckbereich folgende $N_2$-Dosierung verwendet:

p/p0 = 0 - 0,01: $N_2$-Dosierung: 5ml/g
p/p0 = 0,01 - 0,5: $N_2$-Dosierung: 4ml/g.

Zur Bestimmung der BET wurde im Bereich von p/p0 = 0,05 - 0,3 mit mind. 6 Messpunkten extrapoliert. Zur Bestimmung der STSA wurde im Bereich der Schichtdicke des adsorbierten $N_2$ von t = 0,4 - 0,63 nm (entspricht p/p0 = 0,2 - 0,5) mit mind. 7 Messpunkten extrapoliert.

**7.** Bestimmung der Löslichkeit in alkalischen Flüssigkeiten

Die Bestimmung der Alkalilöslichkeit erfolgt gemäß der nachstehend beschriebenen Methode:

1. Zur Bestimmung der Löslichkeit einer Feststoff-Probe muss diese in trockener feinpulvriger Form vorliegen (Trockenstoffgehalt>98%). Ist dies nicht gegeben, so wird die trockene Probe vor Bestimmung der Löslichkeit gemahlen oder gründlich gemörsert.

2. Die Ermittlung der Löslichkeit erfolgt in Dreifachbestimmung. Hierzu werden je 2,0 g trockener Probe je 20 g 0,1 M NaOH eingewogen. Beträgt der ermittelte pH-Wert der Probe jedoch <10, so wird diese Probe verworfen und es wird stattdessen 2,0 g trockener Füllstoff in je 20 g 0,2 M NaOH eingewogen. In Abhängigkeit vom pH-Wert (<10 oder $\geq$10) wird also entweder 0,1 M NaOH verwendet (pH $\geq$10) oder 0,2 M NaOH (pH <10).

3. Die alkalische Suspension wird bei Raumtemperatur für 2 Stunden geschüttelt bei einer Schüttlerzahl von 200 pro Minute. Sollte die Flüssigkeit dabei den Deckel berühren, so ist die Schüttlerzahl soweit zu erniedrigen, dass dies nicht passiert.

4. Die alkalische Suspension wird anschließend mit 6000 x g zentrifugiert.

5. Der Überstand der Zentrifugation wird über eine Por 4 Fritte filtriert.

6. Der Feststoff nach Zentrifugation wird zweimal mit destilliertem Wasser durch Wiederholung von 4. bis 6. gewaschen.

7. Der Feststoff wird für mindestens 24h bei 105 °C im Trockenofen bis zur Gewichtskonstanz getrocknet.

8. Die alkalische Löslichkeit wird wie folgt berechnet:

Alkalische Löslichkeit der Probe [%] = Masse des ungelösten Anteils nach Zentrifugation, Filtration und Trocknung [g] * 100 / Masse des im Punkt 2 erhaltenen Produkts [g]

**8.** Bestimmung des pH-Werts

Die Bestimmung des pH-Wertes erfolgte in Anlehnung an die Norm ASTM D 1512 wie folgt. Die trockene Probe wurde, soweit nicht schon als Pulver vorliegend, zu einem Pulver gemörsert bzw. gemahlen. Jeweils 5 g Probe und 50 g vollentionisiertes Wasser wurden in einem Becherglas eingewogen. Die Suspension wurde unter ständigem Rühren mittels eines Magnetrührers mit Heizfunktion und Rührfisch auf eine Temperatur von 60°C erhitzt und die Temperatur für 30 min bei 60 °C gehalten. Anschließend wurde die Heizfunktion des Rührers deaktiviert, so dass der Ansatz unter Rühren abkühlen konnte. Nach dem Abkühlen wurde das verdunstete Wasser durch erneute Zugabe von vollentionisiertem Wasser aufgefüllt und erneut für 5 min gerührt. Mit einem geeichten Messgerät wurde der pH-Wert der Suspension ermittelt. Die Temperatur der Suspension sollte 23°C ($\pm$ 0,5 °C) betragen. Für jede Probe wurde eine Doppelbestimmung durchgeführt und der gemittelte Wert angegeben.

**9.** Bestimmung des Glasübergangstemperatur

Die Messung der Glasübergangstemperatur erfolgt nach DIN 53765-1994.

**10.** Bestimmung der Emissionsmenge

Der Gehalt an ausgasbaren organischen Verbindungen (Emissionen) wird bestimmt gemäß Thermodesorptionsanalyse nach VDA 278 (05/2016). Die ausgasbaren organischen Gesamtemissionen werden als Summe der Messwerte aus dem VOC und dem FOG Lauf angegeben. Die Konzentration der Einzelkomponenten wird durch Zuordnung der Signalpeaks anhand der Massenspektren und Retentionsindizes ermittelt.

**11.** Bestimmung der OH-Gruppendichte

Eine Bestimmung der oberflächenverfügbaren, sauren Hydroxylgruppen einschließlich phenolischer OH-Gruppen und Phenolat-Gruppen (OH-Gruppendichte) erfolgte qualitativ und quantitativ kolorimetrisch gemäß Sipponen. Das Verfahren nach Sipponen beruht auf der Adsorption des basischen Farbstoffs Azure B an die an der Füllstoffoberfläche zugänglichen sauren Hydroxylgruppen und wird im Detail im Artikel "Determination of surface-accessible acidic hydroxyls and surface area of lignin by cation dye adsorption" (Bioresource Technology 169 (2014) 80-87) beschrieben. Die Menge der oberflächenverfügbaren sauren Hydroxylgruppen wird in mmol/g Füllstoff angegeben.

Die Erfindung wird vorliegend anhand von Ausführungsbeispielen näher erläutert, die jedoch nicht einschränkend auszulegen sind.

Beispiel 1:

In einem ersten Schritt wurde aus Lignin durch eine hydrothermale Behandlung in Wasser ein feinteiliges, partikelförmiges Kohlenstoffmaterial hergestellt.

Einsatzstoff für den ersten Schritt war Lignin UPM BioPiva 190 (kommerziell erhältlich). Der Einsatzstoff hatte eine Löslichkeit in 0,1 M NaOH von 68,5%.

Das Lignin wurde mit Wasser unter Rühren vermischt und so auf einen Trockenstoff-Gehalt (TS-Gehalt) von 11% verdünnt. Anschließend wurde je 7,5 g Natronlauge auf je 100 g Trockenmasse Lignin zugegeben. Die Mischung wurde unter Rühren auf 80°C erwärmt und nach 1 Stunde wurde eine Ligninlösung mit pH 10,1 erhalten.

Die Ligninlösung wurde anschließend auf 220°C aufgeheizt und bei 220°C Grad über eine Dauer von 480 Minuten hydrothermal behandelt. Anschließend wurde die erhaltene Suspension auf Raumtemperatur abgekühlt.

Es stellte sich ein pH von 8,8 ein.

Es wurde eine Probe der Suspension bei 12.000 rpm zentrifugiert und der erhaltene Rückstand getrocknet. Der getrocknete Rückstand wurde auf BET und STSA untersucht. Es wurde eine Mehrpunkt-BET von 39,4 m$^2$/g und eine

STSA von 37,2 m$^2$/g gemessen.

Die erhaltene Ligninsuspension wurde anschließend in einer Filterpresse entwässert und ausgepresst und so auf einen TS-Gehalt von 39,4% mechanisch entwässert. Hierdurch wurde ein Filterkuchen erhalten.

Der D50 der Korngrößenverteilung einer Probe des suspendierten Feststoffes des Filterkuchens lag bei 5 μm.

Es wurde eine Probe der des Filterkuchens getrocknet. Der getrocknete Filterkuchen wurde auf BET und STSA untersucht. Es wurde eine Mehrpunkt-BET von 38,3 m$^2$/g und eine STSA von 36,1 m$^2$/g gemessen.

Der erhaltene Filterkuchen stellt feinteilige, partikelförmige Kohlenstoffmaterial pKM dar, das im zweiten Schritt weiter behandelt wird (modifiziert wird).

In einem zweiten Schritt wurde aus dem feinteiligen, partikelförmigen Kohlenstoffmaterial pKM durch Erhitzen in Gasatmosphäre ein feinteiliges, modifiziertes partikelförmiges Kohlenstoffmaterial (erfindungsgemäß) gewonnen.

Von dem feinteiligen, partikelförmigen Kohlenstoffmaterial pKM, welches nach dem ersten Schritt erhalten worden ist, wurden Proben genommen und bei unterschiedlichen Bedingungen im zweiten Schritt behandelt (Proben 1 bis 5) oder nicht mittels des zweiten Schrittes behandelt, sondern nur an Luft getrocknet (Referenzprobe REF).

Je eine Probe wurde eine Drehrohrofen zugeführt, welcher kontinuierlich mit Stickstoff gespült wurde. Die Probe wurde zunächst bei einer Temperatur von 80°C getrocknet und dann auf die in der folgenden Tabelle 1 angegeben Prozesstemperatur erhitzt und über die angegebene Zeit gehalten, wobei die angegebene Gaszusammensetzung eingestellt wurde. Anschließend wurde die Probe wieder auf Umgebungstemperatur abgekühlt.

Tabelle 1:

|  | Probe 1 | Probe 2 | Probe 3 | Probe 4 | Probe 5 | REF |
|---|---|---|---|---|---|---|
| Gas | N$_2$ O$_2$ < 2% | N$_2$ O$_2$ < 2% | N$_2$ O$_2$ < 2% | N$_2$ 2% < O$_2$ < 5% | N$_2$ 2% < O$_2$ < 5% | Luft |
| Temperatur [°C] | 190 | 190 | 220 | 190 | 220 | 105 |
| Zeit [min] | 15 | 30 | 15 | 15 | 15 | 15 |

Das jeweils erhaltene feinteilige partikelförmige Kohlenstoffmaterial wurde anschließend analysiert. Dabei wurde die in der folgenden Tabelle 2 angegebenen Parameter gemessen:

Tabelle 2:

|  | Probe 1 | Probe 2 | Probe 3 | Probe 4 | Probe 5 | REF |
|---|---|---|---|---|---|---|
| BET [m$^2$/g] | 41,2 | 41,4 | 39,8 | 39,3 | 37,4 | 41,1 |
| STSA [m$^2$/g] | 39,8 | 39,5 | 38,4 | 38,0 | 35,8 | 39,5 |
| OH-Gruppendichte [mmol/g] | 0,29 | 0,27 | 0,27 | 0,22 | 0,17 | 0,30 |
| OH-Gruppendichte [mmol/m$^2$] | 0,0070 | 0,0065 | 0,0068 | 0,0055 | 0,0045 | 0,0073 |
| D50 [μm] | 5,6 | 9,3 | 10,5 | 12,4 | 15,4 | 4,5 |
| Löslichkeit in AcOH [%] | 27,8 | 27,6 | 27,3 | 14,6 | 13,7 | 28,7 |
| Löslichkeit in 0,1 M NaOH [%] | 24,8 | 24,3 | 22,1 | 15,3 | 8,5 | 25,7 |
|  |  |  |  |  |  |  |
| Abnahme Feinteiligkeit D50 | 1,2 | 2,1 | 2,3 | 2,8 | 3,4 | - |
| Abnahme Feinteiligkeit BET | 1,0 | 1,0 | 1,0 | 1,0 | 1,1 | - |
| Abnahme Feinteiligkeit STSA | 1,0 | 1,0 | 1,0 | 1,0 | 1,1 | - |
|  |  |  |  |  |  |  |
| VOC, max [μg/g Tol. äquiv.] | 24 | 31 | 22 | 25 | 22 | 639 |
| FOG, max [μg/g Tol. äquiv.] | 7 | 10 | 8 | 6 | 8 | 80 |
| VOC, Phenol | 0 | 0 | 0 | 0 | 0 | 32 |
| VOC, Guajacol | 0 | 0 | 0 | 0 | 0 | 523 |
| VOC, 2-Methoxy-4-methylphenol | 0 | 0 | 0 | 0 | 0 | 13 |
| VOC, 4-Propylguajacol | 0 | 0 | 0 | 0 | 0 | 11 |

(fortgesetzt)

| | Probe 1 | Probe 2 | Probe 3 | Probe 4 | Probe 5 | REF |
|---|---|---|---|---|---|---|
| VOC, Methanol | 14 | 0 | 14 | 13 | 13 | 11 |
| | | | | | | |
| | | | | | | |
| 14C-Gehalt [Bq/gC] | 0,227 | 0,227 | 0,228 | 0,228 | 0,228 | 0,228 |
| Kohlenstoffgehalt [%] | 71,4 | 71,8 | 71,6 | 71,5 | 71,2 | 71,2 |
| flüchtige Bestandteilen 950°C [%] | 46,5 | 46,4 | 46,6 | 46,5 | 46,4 | 46,8 |
| flüchtige Bestandteilen 200°C [%] | 0,1 | 0,1 | 0,1 | 0,1 | 0,1 | 0,1 |
| Aschegehalt [%] | 3,0 | 2,9 | 2,8 | 3,0 | 3,0 | 2,7 |

Proben 1 - 5 sowie die Referenz REF wurden jeweils als Füllstoff in eine EPDM Matrix eingemischt. Nach einer Vulkanisierung wurde ein Probekörper in wässriger NaOH (0,1 M) gequollen. Die Quellung nach 7 Tagen ist in der nachfolgenden Tabelle 3 dargestellt. Die Quellung wird bestimmt nach DIN ISO 1817:2015:

Tabelle 3:

| | Vulkanisat enthaltend Probe 1 | Vulkanisat enthaltend Probe 2 | Vulkanisat enthaltend Probe 3 | Vulkanisat enthaltend Probe 4 | Vulkanisat enthaltend Probe 5 | Vulkanisat enthaltend REF |
|---|---|---|---|---|---|---|
| Quellung [%] | 24,5 | 20,1 | 19,8 | 15,7 | 12,2 | 40,1 |

Je geringer die ermittelte Löslichkeit der jeweiligen Probe in 0,1% NaOH ist (vgl. Tabelle 2), desto geringer ist auch die ermittelte Quellung eines die jeweilige Probe als Füllstoff enthaltenen Vulkanisats in wässriger NaOH.

Die Herstellung der Mischung für die Compounds sowie die Herstellung der Vulkanisate erfolgte nach der Rezeptur gemäß Tabelle 4 und mittels folgender Prozesse:

Tabelle 4:

| Mischungskomponente | Mischungsanteil [phr] |
|---|---|
| Keltan 8550C | 100,0 |
| Zinkoxid | 5,0 |
| Stearinsäure | 1,0 |
| Sunpar 2280 | 60,0 |
| Material gemäß einer der Proben 1 bis 5 oder der Referenzprobe REF | 140,0 |
| PEG 4000 | 2,0 |
| Schwefel | 1,5 |
| TMTM 80 | 1,9 |
| MBTS | 0,9 |
| ZDBC 80 | 3,7 |

Die Herstellung der Mischungen erfolgte gemäß folgendem Verfahren: Die Mischungen wurden mittels eines Mischers W & P Type GK1,5E (ineinandergreifende Rotorgeometrie) mit einem Füllgrad von 70 %, mit einer Mischertemperatur von 40 °C und einer Drehzahl von 40 U/min. hergestellt.

Die Vulkanisation erfolgte durch Ausheizen bei 160°C entsprechend der im Rheometer ermittelten optimalen t90-Zeit.

**Patentansprüche**

1. Partikelförmiges Kohlenstoffmaterial, **dadurch gekennzeichnet, dass** es

    ◦ einen $^{14}$C-Gehalt von größer als 0,20 Bq/g Kohlenstoff, jedoch von kleiner als 0,45 Bq/g Kohlenstoff,
    ◦ einen D50 der Korngrößenverteilung von weniger als 500 $\mu$m und von mehr als 0,5 $\mu$m, und
    ◦ eine OH Gruppendichte von mindestens 0,05 mmol/g und maximal 0,4 mmol/g, aufweist, und
    ◦ die Löslichkeit des partikelförmigen Kohlenstoffmaterials in alkalischen Flüssigkeiten bei weniger als 25% liegt, wobei die Löslichkeit bestimmt wird gemäß der in der Beschreibung beschriebenen Methode.

2. Partikelförmiges Kohlenstoffmaterial nach Anspruch 1, **dadurch gekennzeichnet, dass** es einen Aschegehalt von weniger als 15 Ma%, bevorzugt weniger als 12 Ma%, 10 Ma%, 8 Ma%, 6 Ma%, 5 Ma%, 4 Ma%, 3 Ma%, 2 Ma% oder weniger aufweist und mehr als 0,25 Ma%, bevorzugt mehr als 0,5 Ma%, weiter bevorzugt mehr als 0,75 Ma% aufweist.

3. Partikelförmiges Kohlenstoffmaterial nach einem Anspruch 1 oder 2, **dadurch gekennzeichnet, dass** es einen D50 der Korngrößenverteilung von weniger als 250 $\mu$m, bevorzugt von weniger als 100 $\mu$m, besonders bevorzugt 50 $\mu$m aufweist, vorzugsweise von mehr als 0,5 $\mu$m, weiter bevorzugt von mehr als 1 $\mu$m, besonders bevorzugt von mehr als 5 $\mu$m, darüber hinaus bevorzugt von mehr als 10 $\mu$m, aufweist.

4. Partikelförmiges Kohlenstoffmaterial nach einem der vorherigen Ansprüche, **dadurch gekennzeichnet, dass** seine Löslichkeit in alkalischen Flüssigkeiten bei weniger als 15%, vorzugsweise bei weniger als 10% liegt, und die alkalischen Flüssigkeiten vorzugsweise wässrige Lösungen von NaOH (0,1 Mol/l) darstellen.

5. Partikelförmiges Kohlenstoffmaterial nach einem der vorherigen Ansprüche, **dadurch gekennzeichnet, dass** es eine OH Gruppendichte von mindestens 0,075 mmol/g, besonders bevorzugt mindestens 0,1 mmol/g und maximal 0,35 mmol/g, besonders bevorzugt maximal 0,3 mmol/g, aufweist.

6. Partikelförmiges Kohlenstoffmaterial nach einem der vorherigen Ansprüche, **dadurch gekennzeichnet, dass** es

    ◦ einen $^{14}$C-Gehalt von größer als 0,23 Bq/g Kohlenstoff, jedoch von kleiner als 0,45 Bq/g Kohlenstoff und/oder
    ◦ keine nach DIN 53765-1994 messbare Glasübergangstemperatur und/oder
    ◦ einen Kohlenstoffgehalt bezogen auf die aschefreie Trockensubstanz zwischen 60 Ma.-% und 80 Ma.-% und/oder
    ◦ einem Gehalt an flüchtigen Bestandteilen gemessen bei 950°C nach DIN53552 von mehr als 30 Ma.-% und/oder
    ◦ einem Gehalt an flüchtigen Bestandteilen gemessen bei zwischen 200°C nach DIN53552 von weniger als 5 Ma.-%,

    aufweist.

7. Partikelförmiges Kohlenstoffmaterial nach einem der vorherigen Ansprüche, **dadurch gekennzeichnet, dass** es eine BET-Oberfläche von mindestens 5 m$^2$/g, bevorzugt mindestens 8 m$^2$/g, weiter bevorzugt mindestens 10 m$^2$/g, darüber hinaus bevorzugt mindestens 15 m$^2$/g, besonders bevorzugt mindestens 20 m$^2$/g, darüber hinausbevorzugt mindestens 30 m$^2$/g, insbesondere mindestens 35 m$^2$/g oder mehr aufweist, wobei die BET Oberfläche vorzugsweise bei maximal 200 m$^2$/g, noch bevorzugter bei maximal 180 m$^2$/g, weiter bevorzugter bei maximal 150 m$^2$/g, besonders bevorzugt bei maximal 120 m$^2$/g liegt.

8. Partikelförmiges Kohlenstoffmaterial nach einem der vorherigen Ansprüche, **dadurch gekennzeichnet, dass** der Gehalt an Dimethylsulfid, Guaiakol und Methylguajakol (Kreosol) jeweils unterhalb 1 mg/kg liegt.

9. Verwendung des partikelförmigen Kohlenstoffmaterials nach einem oder mehreren der vorherigen Ansprüche 1 bis 8 als Zusatz in Polymermischungen, insbesondere Kautschukmischungen wie Elastomermischungen.

10. Eine vulkanisierbare Kautschukzusammensetzung umfassend wenigstens einen Kautschuk und wenigstens eine Füllstoffkomponente, wobei die Füllstoffkomponente wenigstens das partikelförmige Kohlenstoffmaterial nach einem oder mehreren der Ansprüche 1 bis 8 enthält.

**11.** Eine durch Vulkanisation der vulkanisierbaren Kautschukzusammensetzung gemäß Anspruch 10 erhältliche vulkanisierte Kautschukzusammensetzung, **dadurch gekennzeichnet, dass** diese eine Quellung in alkalischen Flüssigkeiten nach 7 Tagen von weniger als 25% aufweist, wobei die Quellung bestimmt wird gemäß DIN ISO 1817:2015 in 0,1 M NaOH.

**Claims**

**1.** A particulate carbon material, **characterized in that** it has

  ○ a $^{14}$C content that is higher than 0.20 Bq/g carbon, but lower than 0.45 Bq/g carbon,
  ○ a D50 of the particle size distribution of less than 500 μm and of more than 0.5 μm, and
  ○ an OH group density of at least 0.05 mmol/g and at maximum 0.4 mmol/g, and
  ○ the solubility of the particulate carbon material in alkaline liquids is less than 25%, wherein solubility is determined according to the method described in the specification.

**2.** The particulate carbon material according to claim 1, **characterized in that** it has an ash content of less than 15% by mass, preferably less than 12% by mass, 10% by mass, 8% by mass, 6% by mass, 5% by mass, 4% by mass, 3% by mass, 2% by mass or less, and more than 0.25% by mass, preferably more than 0.5% by mass, further preferably more than 0.75% by mass.

**3.** The particulate carbon material according to claim 1 or 2, **characterized in that** it has a D50 of the particle size distribution of less than 250 μm, preferably of less than 100 μm, particularly preferably 50 μm, and preferably of more than 0.5 μm, further preferably of more than 1 μm, particularly preferably of more than 5 μm, moreover preferably of more than 10 μm.

**4.** The particulate carbon material according to any one of the preceding claims, **characterized in that** its solubility in alkaline liquids is less than 15%, preferably less than 10% and the alkaline liquids preferably represent aqueous solutions of NaOH (0.1 mol/l).

**5.** The particulate carbon material according to any one of the preceding claims, **characterized in that** it has an OH group density of at least 0.075 mmol/g, particularly preferably at least 0.1 mmol/g, and at maximum 0.35 mmol/g, particularly preferably at maximum 0.3 mmol/g.

**6.** The particulate carbon material according to any one of the preceding claims, **characterized in that** it has

  ○ a $^{14}$C content that is higher than 0.23 Bq/g carbon, but lower than 0.45 Bq/g carbon, and/or
  ○ no glass transition temperature measurable according to DIN 53765-1994, and/or
  ○ a carbon content relative to the ash-free dry substance between 60% by mass and 80% by mass, and/or
  ○ a content of volatile constituents, measured at 950 °C according to DIN 53552, of more than 30% by mass, and/or
  ○ a content of volatile constituents, measured at 200 °C according to DIN 53552 of less than 5% by mass.

**7.** The particulate carbon material according to any one of the preceding claims, **characterized in that** it has a BET surface area of at least 5 m$^2$/g, preferably at least 8 m$^2$/g, further preferably at least 10 m$^2$/g, moreover preferably at least 15 m$^2$/g, particularly preferably at least 20 m$^2$/g, moreover preferably at least 30 m$^2$/g, in particular at least 35 m$^2$/g or more, wherein the BET surface area preferably is at maximum 200 m$^2$/g, even more preferably at maximum 180 m$^2$/g, further preferably at maximum 150 m$^2$/g, particularly preferably at maximum 120 m$^2$/g.

**8.** The particulate carbon material according to any one of the preceding claims, **characterized in that** the content of dimethyl sulfide, guaiacol and methylguaiacol (creosol) is below 1 mg/kg, respectively.

**9.** A use of the particulate carbon material according to any one or more of claims 1 to 8 as an additive in polymer mixtures, in particular rubber mixtures, such as elastomer mixtures.

**10.** A vulcanizable rubber composition comprising at least one rubber and at least one filler component, wherein the filler component contains at least the particulate carbon material according to any one or more of claims 1 to 8.

**11.** A vulcanized rubber composition obtainable by vulcanization of the vulcanizable rubber composition according to claim 10, **characterized in that** it exhibits a swelling in alkaline liquids after 7 days of less than 25%, wherein the swelling is determined according to DIN ISO 1817:2015 in 0.1 M NaOH.

**Revendications**

1. Matériau de carbone sous forme de particules, **caractérisé en ce qu'il** présente

   ◦ une teneur en $^{14}$C supérieure à 0,20 Bq/g carbone, mais inférieure à 0,45 Bq/g carbone,
   ◦ une valeur D50 de la distribution granulométrique inférieure à 500 $\mu$m et supérieure à 0,5 $\mu$m, et
   ◦ une densité de groupements OH d'au moins 0,05 mmol/g et d'au maximum 0,4 mmol/g, et
   ◦ la solubilité du matériau de carbone sous forme de particules dans des liquides alcalins est inférieure à 25 %, la solubilité étant déterminée selon la méthode décrite dans la description.

2. Matériau de carbone sous forme de particules selon la revendication 1, **caractérisé en ce qu'il** présente une teneur en cendres de moins de 15 % en masse, de préférence moins de 12 % en masse, 10 % en masse, 8 % en masse, 6 % en masse, 5 % en masse, 4 % en masse, 3 % en masse, 2 % en masse ou moins, et plus de 0,25 % en masse, de préférence plus de 0,5 % en masse, de manière encore préférée plus de 0,75 % en masse.

3. Matériau de carbone sous forme de particules selon la revendication 1 ou 1 ou 2, **caractérisé en ce qu'il** présente une valeur D50 de la distribution granulométrique inférieure à 250 $\mu$m, de préférence inférieure à 100 $\mu$m, de manière particulièrement préférée 50 $\mu$m, de préférence supérieure à 0,5 $\mu$m, de manière encore préférée supérieure à 1 $\mu$m, de manière particulièrement préférée supérieure à 5 $\mu$m, de manière en outre préférée supérieure à 10 $\mu$m.

4. Matériau de carbone sous forme de particules selon l'une quelconque des revendications précédentes, **caractérisé en ce que** sa solubilité dans des liquides alcalins est inférieure à 15 %, de préférence inférieure à 10 %, et lesdits liquides alcalins de préférence représentent des solutions aqueuses de NaOH (0,1 mol/l).

5. Matériau de carbone sous forme de particules selon l'une quelconque des revendications précédentes, **caractérisé en ce qu'**il présente une densité des groupements OH d'au moins 0,075 mmol/g, de manière particulièrement préférée d'au moins 0,1 mmol/g, et d'au maximum 0,35 mmol/g, de manière particulièrement préférée d'au maximum 0,3 mmol/g.

6. Matériau de carbone sous forme de particules selon l'une quelconque des revendications précédentes, **caractérisé en ce qu'**il présente

   ◦ une teneur en $^{14}$C supérieure à 0,23 Bq/g carbone, mais inférieure à 0,45 Bq/g carbone, et/ou
   ◦ pas de température de transition vitreuse mesurable selon DIN 53765-1994, et/ou
   ◦ une teneur en carbone entre 60 % en masse et 80 % en masse par rapport à la matière sèche exempte de cendres, et/ou
   ◦ une teneur en composants volatils, mesurée à 950 °C selon DIN 53552, de plus de 30 % en masse, et/ou
   ◦ une teneur en composants volatils, mesurée à 200 °C selon DIN 53552, de moins de 5 % en masse.

7. Matériau de carbone sous forme de particules selon l'une quelconque des revendications précédentes, **caractérisé en ce qu'il** présente une surface BET d'au moins 5 m$^2$/g, de préférence d'au moins 8 m$^2$/g, de manière encore préférée d'au moins 10 m$^2$/g, de manière en outre préférée d'au moins 15 m$^2$/g, de manière particulièrement préférée d'au moins 20 m$^2$/g, de manière en outre préférée d'au moins 30 m$^2$/g, en particulier d'au moins 35 m$^2$/g ou plus, la surface BET étant de préférence au maximum 200 m$^2$/g, de manière plus préférée au maximum 180 m$^2$/g, de manière encore plus préférée au maximum 150 m$^2$/g, de manière particulièrement préférée au maximum 120 m$^2$/g.

8. Matériau de carbone sous forme de particules selon l'une quelconque des revendications précédentes, **caractérisé en ce que** la teneur en sulfure de diméthyle, en gaïacol et en méthylgaïacol (créosol) respectivement est inférieure à 1 mg/kg.

9. Utilisation du matériau de carbone sous forme de particules selon l'une quelconque ou plusieurs des revendications 1 à 8 en tant qu'additif dans des mélanges de polymères, en particulier des mélanges de caoutchouc, tels que des mélanges d'élastomères.

10. Composition de caoutchouc vulcanisable comprenant au moins un caoutchouc et au moins un composant de charge, dans laquelle le composant de charge contient au moins le matériau de carbone sous forme de particules selon l'une quelconque ou plusieurs des revendications 1 à 8.

11. Composition de caoutchouc vulcanisée qui peut être obtenue par vulcanisation de la composition de caoutchouc vulcanisable selon la revendication 10, **caractérisée en ce qu'**elle présente un gonflement dans des liquides alcalins après 7 jours inférieur à 25 %, le gonflement étant déterminé selon DIN ISO 1817:2015 dans NaOH 0,1 M.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010043562 A1
- WO 2006031175 A
- WO 2006038863 A
- WO 2009104995 A
- WO 2016020383 A
- WO 2017085278 A
- DE 102018220946 A1
- WO 2013101397 A
- DE 102006057566
- DE 101013001678
- EP 3053929 A
- EP 3170635 B1

**In der Beschreibung aufgeführte Nicht-Patentliteratur**

- **SIPPONEN et al.** Determination of surfaceaccesible acidic hydroxyls and surface area of lignin by cationic dye adsorption. *Bioresource Technology*, 2014, vol. 169, 80-87
- Determination of surface-accessible acidic hydroxyls and surface area of lignin by cation dye adsorption. *Bioresource Technology*, 2014, vol. 169, 80-87